**Europäisches Patentamt**

**European Patent Office**

**Office européen des brevets**

(19)

(11) Veröffentlichungsnummer: **0 264 461 B1**

(12)

# EUROPÄISCHE PATENTSCHRIFT

(45) Veröffentlichungstag der Patentschrift:
02.01.91 Patentblatt 91/01

(51) Int. Cl.$^5$: **G01B 7/02**, G01B 7/14, B61B 13/08

(21) Anmeldenummer: **86114256.0**

(22) Anmeldetag: **15.10.86**

(54) **Verfahren und Vorrichtung zur sicheren Bestimmung des Abstandes eines magnetischen Sensors von einer leitfähigen Reaktionsschiene.**

(43) Veröffentlichungstag der Anmeldung:
27.04.88 Patentblatt 88/17

(45) Bekanntmachung des Hinweises auf die Patenterteilung:
02.01.91 Patentblatt 91/01

(84) Benannte Vertragsstaaten:
CH FR GB IT LI

(56) Entgegenhaltungen:
EP-A- 0 148 312
DE-A- 2 265 046
DE-A- 2 411 139
DE-A- 2 803 877
DE-A- 3 143 512
DE-C- 3 527 619
US-A- 3 849 724

(73) Patentinhaber: **THYSSEN INDUSTRIE AG**
**Am Thyssenhaus 1**
**D-4300 Essen 1 (DE)**

(72) Erfinder: **Meins, Jürgen, Dr.-Ing. Dipl.-Ing.**
**Alte Poststrasse 18 c**
**D-8011 Baldham (DE)**
Erfinder: **Grosser, Helmut, Dipl.-Ing.**
**Heringerstrasse 39**
**D-6432 Heringen 2 (DE)**

(74) Vertreter: **Freiherr von Schorlemer, Reinfried,**
**Dipl.-Phys. et al**
**Patentanwalt Brüder-Grimm-Platz 4**
**D-3500 Kassel (DE)**

EP 0 264 461 B1

**Beschreibung**

Die Erfindung betrifft ein Verfahren und eine Vorrichtung der in den Oberbegriffen der Ansprüche 1 und 8 definierten Gattungen.

Bekannte Abstandsmeßeinrichtungen dieser Art (DE-PS 2411139, US-PS 3849724) dienen beispielsweise bei magnetischen Lagern und Schwebeeinrichtungen, wie sie zur Lageregelung von Trag- und Führungsmagneten in der Magnetfahrtechnik Anwendung finden, zur kontinuierlichen und berührungslosen Messung des Abstands des Sensors von der Reaktionsschiene. Mit dem erhaltenen Abstandsignal wird beispielsweise der Erregerstrom der Tragmagnete eines Magnetschwebefahrzeugs so gesteuert, daß dieses mit einem vorgegebenen Sollabstand von der Reaktionsschiene in der Schwebe gehalten wird.

Zur Vermeidung von Streueinflüssen der Magnetfelder oder von Einflüssen der Spulenströme auf die Ausgangssignale oder auch zur Linearisierung des funktionalen Zusammenhangs zwischen den Induktivitäten der Spulen und den zu erfassenden Abstandsgrößen ist es dabei bekannt, mehrere Spulen anstelle nur einer Spule zu verwenden und diese auf verschiedene Weise zu verbinden. Diesen und anderen bekannten Verfahren und Vorrichtungen zur Abstandsmessung ist jedoch gemeinsam, daß keine sichere Überwachung des Sensors erfolgt. Dies hat zur Folge, daß bei einem Fehler innerhalb des Sensors das Abstandsignal einen Wert einnehmen kann, der einem großen Abstand des Sensors zur Reaktionsschiene entspricht, obwohl dieser Abstand tatsächlich klein ist. Je nach Einsatz und Anwendung des Sensors ergeben sich hieraus Einschränkungen oder aber sicherheitskritische Zustände.

Für die Anwendung der Abstandsmessung bei einer magnetischen Schwebeeinrichtung würde der Fehler, daß bei einem kleinen mechanischen Abstand ein Signal entsprechend einem großen Abstand gegeben wird, zu einer stärkeren Erregung des Trag- oder Führungsmagneten führen, um den Abstand zu verkleinern, und dadurch zu einer Berührung von Magnet und Reaktionsschiene bei hoher magnetischer Anpreßkraft führen. Dies stellt ein erhebliches Sicherheitsrisiko dar. Erwünscht wären daher Verfahren und Vorrichtungen der eingangs bezeichneten Gattung, bei denen derartige Fehler nicht auftreten oder Fehlfunktionen automatisch angezeigt werden.

Vorrichtungen mit Selbstüberprüfung sind bereits bekannt. Bei einem bekannten Näherungsschalter beispielsweise (DE-PS 35 27 619), der wie üblich dazu bestimmt ist, sein Ausgangssignal beim Überschreiten eines vorgegebenen Abstands von einem Metallteil bzw. einer Reaktionsschiene zu wechseln, wird dieser vorgegebene Abstand durch Schwellwerte eines Schwellwertschalters festgelegt. Fehlersignale werden z. B. dann abgegeben, wenn sich der Sensor zu stark der Reaktionsschiene annähert. Das Fehlersignal läßt aber keinen Rückschluß darauf zu, in welchem Abstand sich der Sensor tatsächlich zur Reaktionsschiene befindet. Daraus folgt, daß die Prüfschaltung eine korrekte Funktion anzeigt, solange das Oszillatorsignal nicht unterhalb der Schwelle liegt. Mit einer solchen Prüfung sind daher die oben beschriebenen Fehler nicht vermeidbar bzw. anzeigbar. Bei bloßer Anwendung der bekannten Schaltung könnte der Minimalabstand längst überschritten sein, ohne daß sich eine Fehleranzeige ergibt.

Entsprechendes würde sich bei analoger Anwendung gattungsfremder Vorrichtungen ergeben (EP 0 148 312), mittels derer die Lage von Elektroden auf einem Gegenstand überprüft werden kann und die dazu eine fehlerfreie Funktion der vorhandenen Schaltelemente zur Voraussetzung haben.

Der Erfindung liegt die Aufgabe zugrunde, das Verfahren und die Vorrichtung der eingangs bezeichneten Gattungen, dahingehend zu verbessern, daß zusätzlich zu der Abstandsmessung eine sichere Überwachung der Sensorfunktion erfolgt.

Zur Lösung dieser Aufgabe ist die Erfindung durch die kennzeichnenden Merkmale der Ansprüche 1 und 8 gekennzeichnet.

Die Erfindung bringt den Vorteil mit sich, daß nicht nur die Sensorfunktion an sich überprüft, sondern gleichzeitig auch eine Überprüfung dahingehend vorgenommen wird, daß die vom Sensor erzeugten Ausgangssignale Werte annehmen, die sie unter normalen Betriebsverhältnissen einnehmen müßten. Dabei entspricht vorzugsweise einer dieser Werte dem beim normalen Betrieb üblichen Abstand und ein anderer Wert einem vorgegebenen Minimalabstand, der in keinem Fall unterschritten werden darf. Dadurch, daß die Referenzspule nur schwach mit der Schiene magnetisch gekoppelt ist, entsteht im Referenzspulenkreis ein Strom, der vom Schienenabstand unabhängig ist. Da die Referenzspule mit der gleichen Spannung wie die Meßspule beaufschlagt wird, und ihr Strom vom Abstand unabhängig ist, kann der Differenzstrom, gebildet aus dem Strom in der Meßspule und dem Strom in der Referenzspule, als Meßgröße für den Abstand dienen. Durch das Zuschalten der Zusatzimpedanz in den Meßspulenstromkreis verringert sich der Meßspulenstrom und wird weitgehend unabhängig vom Abstand. Das Zuschalten der Zusatzimpedanz in den Stromkreis der Referenzspule verringert den Referenzspulenstrom entsprechend. Dadurch ist in der Betriebsart "Prüfen" die Differenz des Meßspulen- und des Referenzspulenstroms weitgehend unabhängig vom Abstand. Bei fehlerfreier Funktion der Gesamtanordnung ist der Differenzstrom in der Betriebsart "Prüfen" durch einen bestimmten Wert gekennzeichnet, der sich mit dem Abstand nur geringfügig ändert, so daß auftretende Fehler, die sich durch eine entsprechende Abweichung bemerkbar machen, erfaßt werden können.

Vorteilhaft bei dieser Anordung ist außerdem, daß durch die Bildung der Stromdifferenz aus Meßspule und Referenzspule der Einfluß der Temperatur auf die Spulenwiderstände weitgehend eliminiert wird. Im einzelnen kann das Verfahren wie folgt vorteilhaft ausgestaltet sein :

Eine gute Anpaßmöglichkeit des Sensorsignals an verschiedene Materialien der Reaktionsschiene ergibt sich dadurch, daß die Wirk- und Blindanteile der Ausgangssignale durch einen im Takt der angelegten Spannung gesteuerten Schalter getrennt, gleichgerichtet, und anschließend geglättet werden.

Die Nutung der Reaktionsschiene führt sowohl für den Wirkanteil als auch für den Blindanteil des Differenzstromes zu Schwankungen. Diese Schwankungen des aus den beiden Anteilen zusammenzusetzenden Ausgangssignals können dadurch minimiert werden, daß die Wirk- und Blindanteile des Differenzstromes so gewichtet werden, daß der Einfluß durch die Nutung – eine Welligkeit – in beiden Anteilen gleich groß und gegenläufig ist und damit das aus beiden gewichteten Anteilen gebildete Summensignal – zu einem bestimmten Ausgangssignal – einen minimalen Nutungseinfluß aufweist. Die Gewichtung erfolgt hierbei durch Verstärken oder Abschwächen um einen nur durch die geometrischen Verhältnisse bestimmten, aber zeitlich konstanten Faktor.

Zur Prüfung der Schaltung wird in der Schaltphase, in der die Impedanzen eingeschaltet sind, das Ausgangssignal auf die Einhaltung eines vorgegebenen Toleranzbereiches überprüft. Liegt dieser Wert außerhalb des Toleranzbereichs so ist der Sensor fehlerhaft, und es wird ein Signal zur Entregung des Magneten gebildet.

Die Zusatzimpedanzen werden so dimensioniert, daß das Ausgangssignal in der Betriebsart "Messen" und "Prüfen" bei einem bestimmten, minimalen Abstand, gleich sind. Diesen Abstand bestimmt man so, daß ein Sicherheitsabstand von der Reaktionsschiene nicht unterschritten wird.

Liegt in der Betriebsart Messen das Ausgangssignal gleich oder unterhalb des Minimalabstandes, so wird ein Signal zur Entregung des Magneten gebildet.

Die Sicherheit bezüglich der Erkennung von Fehlern wird erhöht, wenn zwei Sensoranordnungen verwendet und die Zusatzimpedanzen synchron zugeschaltet werden, dabei das Signal für die Zuschaltung der Impedanz des ersten Sensors mit dem Ausgangssignal des zweiten Sensors auf die Einhaltung der Toleranzbereiche überprüft und aus beiden Ausgangssignalen ein Signal für die Fehlerfreiheit der gesamten Meßanordnung gebildet wird.

Statt mit zwei räumlich getrennten Sensoren zu arbeiten, kann man in vorteilhafter Weise mit einer räumlichen Zusammenfassung der Sensoren arbeiten, wobei eine Entkopplung der Spulen des ersten Sensors von den Spulen des zweiten Sensors dadurch bewirkt wird, daß die Spulen des ersten Sensors mit einer anderen Frequenz betrieben werden als die Spulen des zweiten Sensors.

Die Entkopplung der Spulen des ersten Sensors von den Spulen des zweiten Sensors kann auch durch die geometrische Gestaltung der Spulen und-/oder Anordnung der Spulen zueinander bewirkt werden.

Eine vorteilhafte Vorrichtung zur Durchführung des Verfahrens ist wie folgt aufgebaut : Eine Meßspule ist in der Öffnungsebene eines leitfähigen, zur Reaktionsschiene hin offenen Gehäuses angebracht. Eine zweite, als Referenzspule dienende Spule ist unterhalb der Meßspule im Gehäuse angebracht. Eine Wechselspannungsquelle dient zur Speisung beider Spulenstromkreise. Im Meßspulenkreis und im Referenzspulenkreis ist je eine Zusatzimpedanz eingeschaltet, zu denen ein überbrückender Schalter parallelgeschaltet ist. Eine Differenzstrommeßstelle ist in einem der Meßspule und der Referenzspule gemeinsamen Teil des Stromkreises eingeschaltet. Das leitfähige, zur Reaktionsschiene hin offene Gehäuse schirmt die Meßspule gegen magnetische, umgebende Wechselfelder ab. Die Öffnung gegenüber der Reaktionsschiene ermöglicht die Ankopplung an die Reaktionsschiene. Dadurch, daß die Referenzspule in dem Gehäuse unterhalb der Meßspule angebracht ist, befindet es sich im abgeschirmten Raum und ist zusätzlich durch die Meßspule gegenüber der Schiene entkoppelt. Die Synchronschalter, die die Zusatzimpedanzen periodisch und gleichzeitig überbrücken, ermöglichen an der Differenzstrommeßstelle die abwechselnde Abnahme des Meßsignals und des Prüfsignals, so daß eine dauernde überwachung gewährleistet ist. Im einzelnen kann die Vorrichtung wie folgt vorteilhaft ausgestaltet sein :

Dadurch, daß die Referenzspule einen kleineren Wicklungsquerschnitt hat als die Meßspule, kann die magnetische Ankopplung beider Spulen an das Gehäuse ungefähr gleichgemacht werden, wobei wegen der von beiden Spulen annähernd gleichen, in dem Gehäuse induzierten Ströme die ohm'sche und auch die induktive Rückwirkung auf die Spulen annähernd gleichgemacht werden, so daß die Spulen in ihrem elektrischen Verhalten annähernd gleich sind.

Dadurch, daß die Meßspule in Form zweier Schleifen mit wechselndem Wicklungssinn und die Referenzspule in Form zweier Schleifen von gleichfalls wechselndem Wicklungssinn gewickelt sind, können die Meßspule und die Reaktionsspule einfach voneinander entkoppelt werden.

Im folgenden wird anhand einer Zeichnung ein Ausführungsbeispiel der Erfindung erläutert. Es zeige im einzelnen :

Fig. 1 eine perspektivische schematische Ansicht eines Abstandsensors bestehend aus einer Sensorspule und einer Referenzspule,

Fig. 2 das elektrische Ersatzschaltbild einer Sensorspule mit dem abstandsabhängigen Verlustwiderstand und der abstandsabhängigen Gesamtinduktivität ;

Fig. 3 das elektrische Prinzipschaltbild der Speisung von der Sensorspule, der Referenzspule, der schaltbaren Zusatzinduktivitäten und der Anordnung der Differenzstrommeßstelle ;

Fig. 4 eine schematisch dargestellte Schaltungsanordnung zur getrennten Ermittlung der vom Abstand abhängigen Rückwirkungen auf die Wirk- und die Blindkomponente der Sensorspulenimpedanz,

Fig. 5 eine schematisch dargestellte Anordnung zur sicheren Überprüfung der Sensorfunktion und der Unterschreitung eines eingestellten Minimalabstandes durch zyklischen Wechsel der Betriebsarten "Messen" und "Prüfen" ;

Fig. 6 das zeitliche Takt- und Signalmuster zur sicheren Funktions- und Minimalabstandsüberwachung ;

Fig. 7 enthält eine erweiterte Schalfungsanordnung.

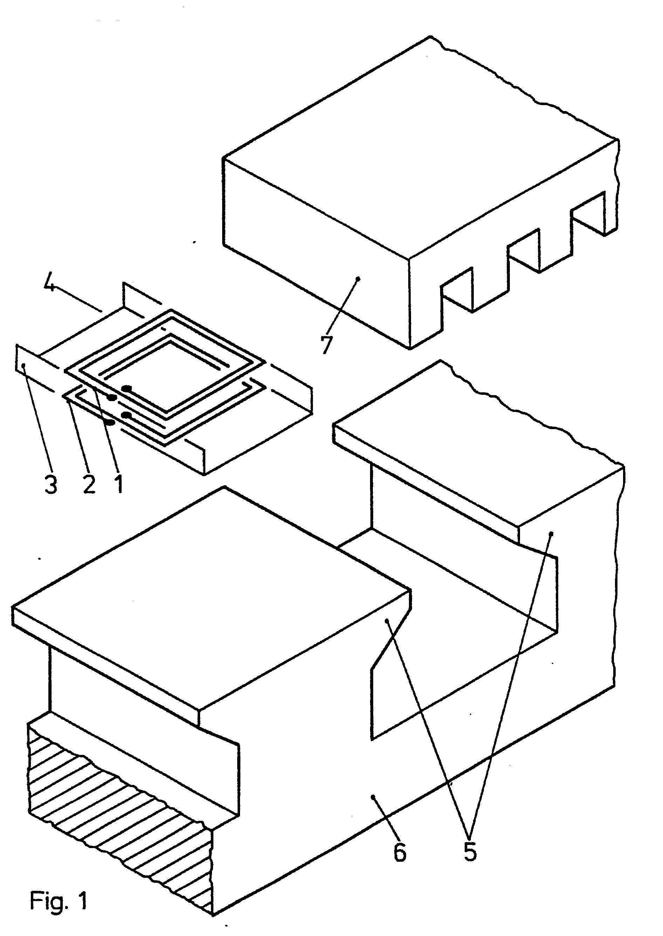

Bei dem in Fig. 1 in schematischer Weise dargestellten Ausführungsbeispiel ist zwischen den Polen 5 des Elektromagneten 6 der Sensor 4 derart angeordnet, daß die Sensorspule 1 der ferromagnetischen Reaktionsschiene 7 zugewandt ist, gegen die auch der Abstand ermittelt werden soll. Die außerdem im Sensor 4 angeordnete Referenzspule 2 ist einem metallischem Schirm 3 zugewendet und unterliegt somit nicht dem Einfluß der Reaktionsschiene 7. Außerdem hat der metallische Schirm 3 die Aufgabe, das magnetische Feld des Sensors 4 in Richtung der nicht dargestellten Magnetspule des Magneten 6 abzuschirmen, um ein von der Einbausituation des Sensors 4 in den Magneten 6 unabhängiges Sensorsignal zu erhalten.

Die Sensorspulen 1 und 2 sind vorzugsweise in gedruckter Leiterplattentechnik ausgebildet.

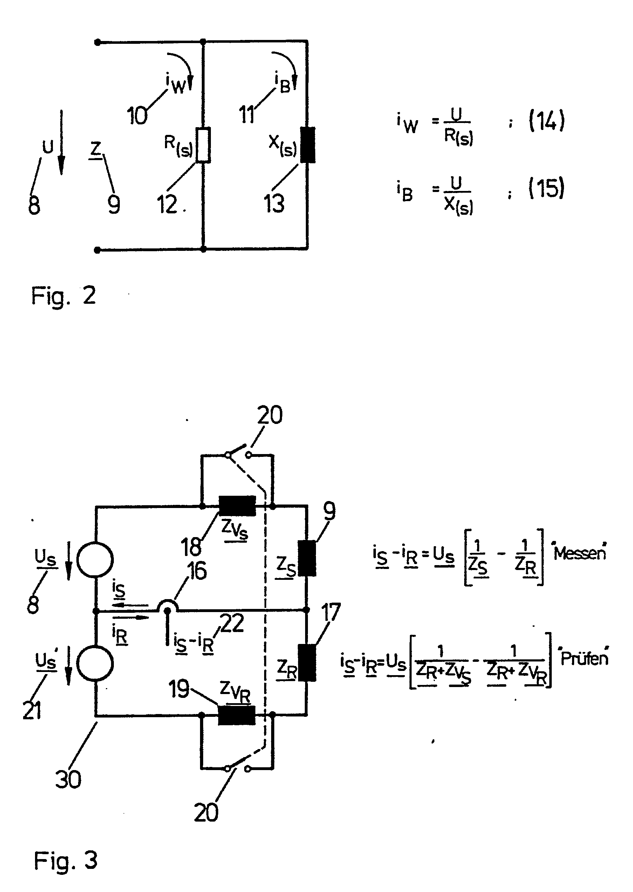

In Fig. 2 ist das elektrische Ersatzschaltbild einer der beiden Sensorspulen 1 oder 2 gemäß Fig. 1 dargestellt. Es enthält den Wirkwiderstand R (s) 12, der bei der Sensorspule 1 vom Abstand s und von der Temperatur $\vartheta$ abhängig ist, bei der Sensorreferenzspule 2 ausschließlich von der Temperatur $\vartheta$ abhängig ist und es enthält den Blindwiderstand X(s) 13, der bei der Spule 1 vom Abstand abhängig ist und bei der Spule 2 vom Abstand unabhängig ist. Die Gesamtimpedanz $\underline{Z}$ 9 wird gebildet aus der Parallelschaltung des Wirkwiderstandes R(s) 12 und des Blindwiderstandes X(s) 13. Bei der Speisung mit der Spannung $\underline{U}$ 8 ergibt sich durch den Wirkwiderstand R(s) ein Wirkstrom $i_W$ 10 und durch den Blindwiderstand X(s) 13 ein Blindstrom $i_B$ 11.

Der formale Zusammenhang dieser elektrischen Größen ist durch die Beziehungen 14, 15 angegeben.

Die elektrische Verschaltung der einzelnen Komponenten ist in Fig. 3 dargestellt. Die Sensorspule 2 mit der Impedanz $Z_s$ 9 bildet mit der Zusatzimpedanz $Z_{vs}$ 18, dem Schalter 20, der Speisespannung $U_S$ 8 und der Differenzstrommeßstelle 16 einen geschlossenen elektrischen Stromkreis.

Ebenso bilden die Referenzspule 2 mit der Impedanz $Z_R$ 17, der Zusatzimpedanz $Z_{VR}$ 19, dem Schalter 20, der Speisespannung $U_{S'}$ 21 und der Differenzstrommeßstelle 16 einen weiteren elektrischen Stromkreis. Beide Stromkreise sind über die Differenzstrommeßstelle 16 so miteinander verbunden, daß aufgrund der angegebenen Phasenlagen der Spannungen $U_s$ 8 und $U_s'$ 21 von der Strommeßstelle 16 der Differenzstrom $i_s$-$i_R$ 22 erfaßt wird.

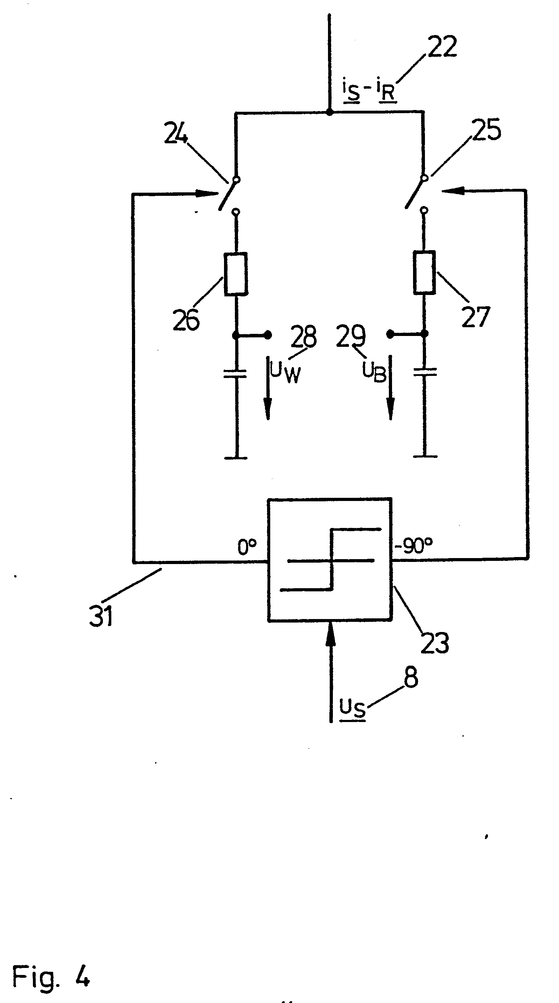

In Fig. 4 ist eine Schaltungsanordnung zur Ermittlung von Gleichspannungssignalen entsprechend der Wirk- und der Blindkomponente des Differenzstromes $i_s$-$i_R$ dargestellt.

Dieser Schaltungsanordnung wird ein Differenzstromsignal $i_s$-$i_R$ 22 und die Speisespannung $U_s$ 8 zugeführt.

Das Differenzstromsignal $i_s$-$i_R$ wird dem Schalter 24 zur Demodulation des Differenzstromwirkanteils und dem Schalter 25 zur Demodulation des Differenzstromblindanteiles zugeführt. Die entsprechenden Schaltsignale werden in dem Komparator 23 aus der Speisespannung 8 abgeleitet. Ein mit der Speisespannung 8 phasengleiches Rechtecksignal steuert den Schalter 24, ein um 90° el. nacheilendes Rechtecksignal steuert den Schalter 25. Das Ausgangssignal des Schalters 24 wird in einem Filter 26 geglättet und liefert das Signal $U_w$ 28 entsprechend der Wirkkomponente des Differenzstromes ; das Ausgangssignal des Schalters 25 wird in einem Filter 27 geglättet und liefert das Signal $U_B$ 29 entsprechend der Blindkomponente des Differenzstromes.

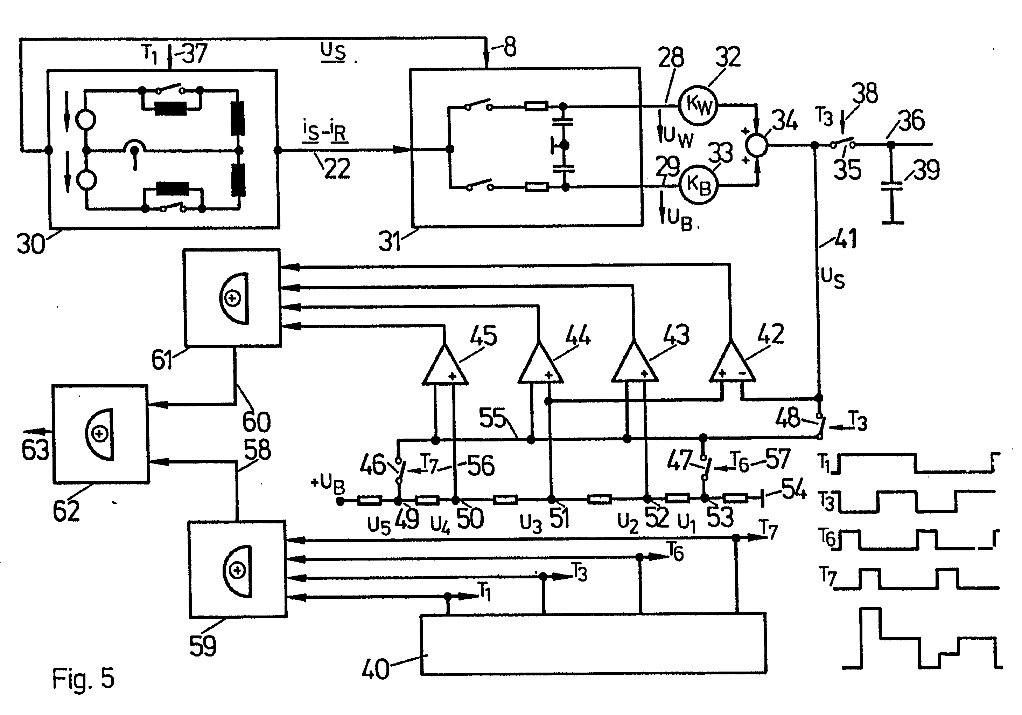

Fig. 5 zeigt schematisch die Verschaltung des Sensors 30 entsprechend Fig. 3, der Schaltungsanordnung 31 gemäß Fig. 4, einer Additionsschaltung zur Bewertung und Addition der Signale $U_w$ 28 und $U_B$ 29 und zusätzlichen Bausteinen zur sicheren Überprüfung der Sensorfunktion und der Unterschreitung eines eingestellten Minimalabstandes.

Die Additionsschaltung enthält die Koeffizientenglieder 32, 33 und die Summierstelle 34. Die Bedeutung der Additionsschaltung ergibt sich aus dem Umstand, daß in der Reaktionsschiene 7 gemäß Fig. 1 angeordnete Nuten einen unterschiedlichen Einfluß auf die Signale $U_w$ 28 und $U_B$ 29 ausüben, wobei aber der vom Abstand abhängige Einfluß auf diese beiden Signale gleich ist. Ein minimaler Nutungseinfluß ergibt sich bei auf die Nutung der Reaktionsschiene abgestimmter Bewertung durch die Koeffizienten $K_w$ 32 und $K_B$ 33.

Das Schaltglied 35 wird durch das Signal $T_3$ 38 angesteuert und bildet in Verbindung mit dem Kondensator 39 ein Halteglied, so daß am Ausgang dieser Schaltungseinrichtung das kontinuierliche Abstandsignal 36 gebildet wird.

Das Prinzip der sicheren Überprüfung der Sensorfunktion besteht in der Anregung des Sensors durch das Schaltsignal $T_1$ 37, welches in dem Taktgenerator 40 erzeugt wird und dem Vergleich eines aus der Anregungs antwort des Sensors gebildeten Impulsmusters mit einem aus der Anregung selbst gebildeten Impulsmuster. Hierzu werden die Schalter 20 gemäß Fig. 3 periodisch durch das Signal $T_1$ 37 bestätigt. Als Folge hieraus ergibt sich eine periodische Änderung des Stromdifferenzwertes is − $i_R$ 22 zwischen dem aktuellen, vom Abstand zur Reaktionsschiene abhängigen, Meßwert und einem durch die Zusatzimpedanzen $Z_{VS}$ 18 und $Z_{VR}$ 19 eingestellten Festwert, der einem vorgegebenen Minimalabstand entspricht. Diese periodische Änderung wird in dem Ausgangssignal $U_s$ 41 der Summierstelle 34 abgebildet. Das Signal $U_s$ 41 wird einem Komparator 42 zugeführt. In dem Komparator findet ein Vergleich mit der an dem Widerstandsnetzwerk 54 anliegenden Spannung 51 statt. Weiterhin wird ein Signalmuster 55 über die Schalter 46, 47, 48 erzeugt und den Komparatoren 43, 44, 45 zugeführt.

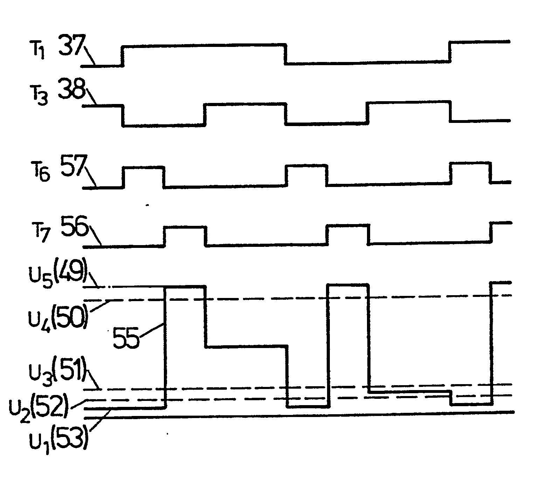

In den Komparatoren findet ein Vergleich des Signalmusters 55 mit den an dem Widerstandsteiler 54 anliegenden Spannungen $U_4$ 50, $U_3$ 51, $U_2$ 52 statt. Der zeitliche Verlauf der Signale ist in Fig. 6 dargestellt. Während des Taktes $T_6$ 57 nimmt das Signal 55 über den geschlossenen Schalter 47 den Wert von $U_1$ 53 an. Hierdurch wird der Widerstandsteiler 54 dahingehend überprüft, daß die Spannung $U_1$ 53 unterhalb der durch $U_2$ 52 gebildeten Schwelle liegt.

Während des Taktes $T_7$ 56 nimmt das Signal 55 den Wert von $U_5$ 49 an. Hierdurch wird der Widerstandsteiler 54 dahingehend überprüft, daß die Spannung $U_5$ 49 oberhalb der durch $U_4$ 50 gebildeten Schwelle liegt. Während des Taktes $T_3$ nimmt das Signal 55 den Wert von $U_s$ 41 an. Hierdurch wird überprüft, ob das Sensorausgangssignal innerhalb des durch die Schwellen $U_3$ 51 und $U_4$ 50 gekennzeichneten Arbeitsbereich liegt.

In der Betriebsart "Prüfen" ergibt sich während der Takte $T_6$ 57 und $T_7$ 56 ein gleicher Signalverlauf wie in der Betriebsart "Messen". Während des Taktes $T_3$ 38 erfolgt eine Überprüfung, ob das Sensorsignal $U_s$ 41 innerhalb des durch die Schwellen $U_2$ 52 und $U_3$ 51 gekennzeichneten Bereiches liegt. Hierdurch erfolgt die Überprüfung des Sensors 30 und der Schaltungsanordnung 31 hinsichtlich der elektrischen Eigenschaften.

Das in Fig. 6 dargestellte Taktmuster $T_1$ 37, $T_3$ 38, $T_6$ 57, $T_7$ 56 wird in dem Taktgenerator 40 generiert. Die eigentliche Überprüfung der Sensorfunktion erfolgt durch Bildung eines Taktmusters 58 in der Verknüpfungsschaltung 59, sowie der Bildung eines Taktmusters 60 in der Verknüpfungsschaltung 61 mit nachfolgendem Vergleich der Taktmuster 58, 60 in der Vergleichsschaltung 62. Die Vergleichsschaltung 62 liefert das logische Ausgangssignal 63, welches seinen Zustand bei Unterschreitung des Minimalabstandes oder bei Sensorfehlern ändert.

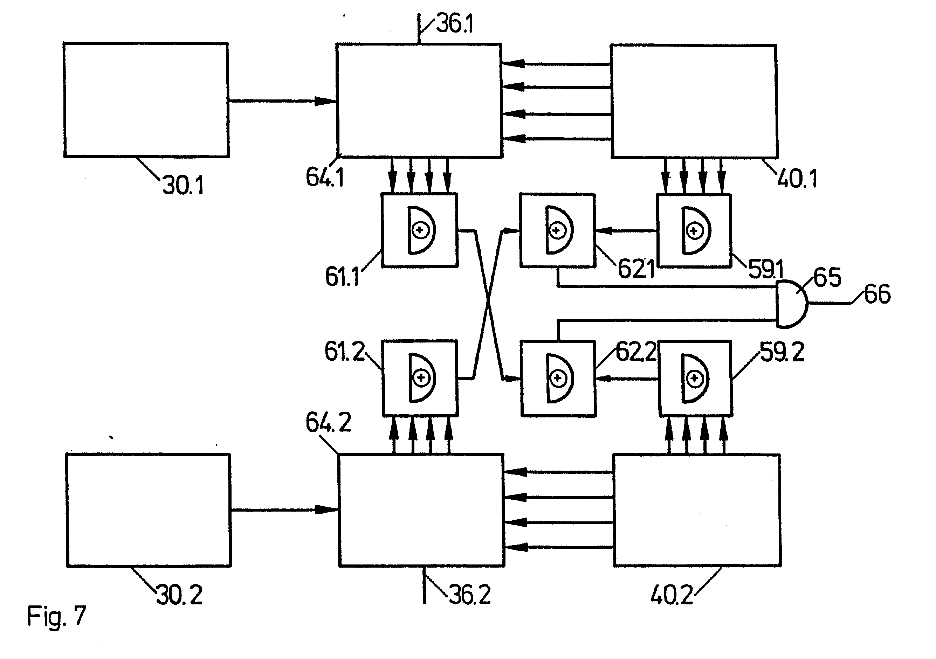

In Fig. 7 ist eine bezüglich der Sicherheit zur Erkennung von Fehlern erweiterte Schaltungsanordnung dargestellt. Sie enthält zwei elektrisch voneinander unabhängige Schaltungsanordnungen gemäß Fig. 5, wobei eine Schaltungsanordnung die Bausteine Sensor 30.1, Sensor- und Prüfelektronik 64.1, Taktaufbereitung 40.1, Signalverknüpfung 61.1, Taktverknüpfung 59.1 und Vergleichsschaltung 62.1 enthält. Für die andere Schaltungsanordnung gelten die entsprechenden Bezeichnungen 30.2, 64.2, 40.2, 61.2, 59.2 und 62.2. Hinzugefügt ist die weitere Verknüpfungsschaltung 65, deren Ausgangssignal 66 dann den logischen Zustand ändert, wenn eine der beiden Schaltungsanordnungen einen Fehler aufweist oder aber der Minimalabstand unterschritten wird.

Diese Anordnung liefert die beiden vom Abstand abhängigen Signale 36.1 und 36.2

## Ansprüche

1. Verfahren zur sicheren Bestimmung des Abstands eines magnetischen Sensors (4) von einer leitfähigen Reaktionsschiene (7), bei dem ein eine Meßspule (1) aufweisender Stromkreis mit einer Wechselspannung beaufschlagt und der vom Abstand der Meßspule (1) von der Reaktionsschiene (7) abhängige Spulenstrom zur Erzeugung von dem Abstand entsprechenden Ausgangssignalen herangezogen wird, dadurch gekennzeichnet, daß eine in einen weiteren Stromkreis geschaltete, mit der Reaktionsschiene (7) nur schwach in magnetischer Kopplung stehende Referenzspule (2) mit der gleichen Wechselspannung wie die Meßspule (1) beaufschlagt und zur Erzeugung der Ausgangssignale der Differenzstrom aus dem Strom in der Meßspule (1) und dem Strom in der Referenzspule (2) herangezogen wird, daß durch die periodische Zuschaltung je einer Zusatzimpedanz ($Z_{VS}$ 18, $Z_{VR}$ 19) in die Stromkreise abwechselebnd Betriebsarten "Messen" und "Prüfen" derart erzeugt werden, daß die Ausgangssignale in den Betriebsarten "Messen" dem Abstand und in den Betriebsarten "Prüfen" einem vom Abstand im wesentlichen unabhängigen Wert entsprechen, daß während der Betriebsarten "Messen" die dem Abstand entsprechenden Ausgangssignale und während der Betriebsarten "Prüfen" die vom Abstand unabhängigen Ausgangssignale auf die Einhaltung vorgegebener Toleranzbereiche überprüft werden und daß beim Überschreiten dieser Toleranzbereiche Abschaltsignale erzeugt werden.

2. Verfahren nach Anspruch 1, dadurch gekennzeichnet, daß die Zusatzimpedanzen ($Z_{VS}$ 18, $Z_{VR}$ 19) so gewählt werden, daß das Ausgangssignal in der Betriebsart "Prüfen" einem vorgewrenählten Minimalabstand entspricht.

3. Verfahren nach Anspruch 1 oder 2, dadurch gekennzeichnet, daß die Wirk- und Blindanteile der Ausgangssignale durch einen im Takt der angelegten Spannung gesteuerten Schalter (24, 25) getrennt, gleichgerichtet und anschließend geglättet werden.

4. Verfenahren nach Anspruch 3, dadurch gekennzeichnet, daß die Wirk- und Blindanteile so gewichtet werden, daß der Einfluß durch die Nutung der Reaktionsschiene (7) in beiden Anteilen gleich groß und gegenphasig ist, und sie zu einem Ausgangssignal addiert werden.

5. Verfahren nach einem der Ansprüche 1 bis 4, dadurch gekennzeichnet, daß zwei Sensoren (30.1, 30.2) verwendet und die Zusatzimpedanzen synchron zugeschaltet werden, daß das Signal für die Zuschaltung der Zusatzimpedanz des ersten Sensors (30.1) mit dem Ausgangssignal des zweiten Sensors (30.2) auf die Einhaltung der Toleranzbereiche geprüft wird, daß das Signal für die Zuschaltung der Impedanz des zweiten Sensors (30.2) mit dem Ausgangssignal des ersten Sensors (30.1) auf das Einhalten der Toleranzbereiche geprüft wird und daß aus beiden Ausgangssignalen ein Signal für die Fehlerfreiheit der Gesamtmeßanordnung gebildet wird.

6. Verfahren nach Anspruch 5, dadurch gekennzeichnet, daß die beiden Sensoren (30.1, 30.2) räumlich zusammengefaßt werden und eine Entkopplung der Spulen des ersten Sensors (30.1) von den Spulen des zweiten Sensors (30.2) dadurch bewirkt wird, daß die Spulen des ersten Sensors (30.1) mit einer anderen Freqenz betrieben werden als die Spulen des zweiten Sensors (30.2).

7. Verfahren nach Anspruch 5, dadurch gekennzeichnet, daß die Entkopplung der Spulen des ersten Sensors (30.1) von den Spulen des zweiten Sensors (30. 2) durch geometrische Gestaltung der Spulen und/oder Anordnung der Spulen zueinander bewirkt wird.

8. Vorrichtung zur sicheren Bestimmung des Abstands einer leitfähigen Reaktionsschiene (7) von einem magnetischen Sensor (4), der eine in einen Stromkreis geschaltete Meßspule (1) aufweist, mit einer Wechselspannungsquelle ($U_S$ 8) zur Beaufschlagung des Stromkreises mit einer Wechselspannung derart, daß in einer Betriebsart "Messen" durch die Meßspule ein vom Abstand des Sensors (4) zur Reaktionsschiene (7) abhängiger Strom fließt, und mit einer Meßstelle (16) zur Messung des die Meßspule (1) durchfließenden Stroms und zur Erzeugung von dem Abstand entsprechenden Ausgangssignalen, gekennzeichnet durch eine in einen weiteren Stromkreis geschaltete, mit der Reaktionsschiene (7) nur schwach in magnetischer Kopplung stehende Referenzspule (2), eine Wechselspannungsquelle ($U_S$ 8, $U_S$ 21,) für die Speisung beider Stromkreise, je eine in den Stromkreisen angeordnete Zusatzimpedanz ($Z_{VS}$ 18, $Z_{VR}$ 19) für eine Betriebsart "Prüfen", durch deren Zuschaltung die Ausgangssignale im wesentlichen unabhängig vom Abstand werden, eine Schaltvorrichtung (20) zum periodischen Zu- und Abschalten der Zusatzimpedanzen ($Z_{VS}$ 18, $Z_{VR}$ 19) zwecks Herstellung der Betriebsarten "Messen" und "Prüfen", eine als Differenzstrommeßstelle (16) in einem der Meßspule (1) und der Referenzspule (2) gemeinsamen Teil der Stromkreise ausgebildete Meßstelle und eine Schaltungsanordnung (42-63) zur Überwachung der Ausgangssignale auf die Einhaltung vorgewählter Toleranzbereiche in den Betriebsarten "Messen" und "Prüfen" und zur Erzeugung eines Abschaltsignals beim Herausfallen der Ausgangssignale aus diesen Toleranzbereichen.

9. Vorrichtung nach Anspruch 8, dadurch gekennzeichnet, daß die Referenzspule (2) einen kleineren Wicklungsquerschnitt hat als die Meßspule (1).

10. Vorrichtung nach Anspruch 9, dadurch gekennzeichnet, daß die Meßspule in Form zweier Schleifen mit wechselndem Wicklungssinn und die Referenzspule in Form zweier Schleifen mit gleichfalls wechselndem Wicklungssinn gewickelt sind.

**Claims**

1. Method for the reliable determination of the spacing of a magnetic sensor (4) from a conductive reaction rail (7) in which a circuit with a measuring coil (1) is energised by an alternating voltage and the coil current dependent on the spacing of the measuring coil (1) from the reaction rail (7) is determined to enerate output signals corresponding to the spacing, characterized in that a reference coil (2) connected in a further circuit and only magnetically coupled to the reaction rail (7) is energised by the same alternating voltage as the measuring coil (1) and the differential current is derived from the current in the measuring coil (1) and the current in the reference coil (7) to generate the output signals, in that alternating "measurement" and "test" modes of operation are so established by the periodic switching in of an additional impedance ($Z_{VS}$ 18, $Z_{VR}$ 19) in each of the circuits that the output signals correspond in the "measurement" mode of operation to the spacing and in the "test" mode of operation to a value substantially independent of the spacing, in that during the "measurement" mode of operation the output signals corresponding to the spacing and during the "test" mode of operation the output signals independent of the spacing are checked for the maintenance of predetermined tolerance ranges and in that cut-off signals are generated on overstepping these tolerance ranges.

2. Method according to claim 1, characterized in that the additional impedances ($Z_{VS}$ 18, $Z_{VR}$ 19) are so selected that the output signal in the "test" mode of operation corresponds to a predetermined minimum spacing.

3. Method according to claim 1 or 2, characterized in that the effective and blank parts of the output signals are separated by a switch (24, 25) controlled in synchronism with the applied voltage, rectified and then smoothed.

4. Method according to claim 3, characterized in that the effective and blank parts are so weighted that the influence of the grooving of the reaction rail (7) is of the same magnitude and opposite phase in the two parts, and they are added to an output signal.

5. Method according to one of claims 1 to 4, characterized in that two sensors (30.1, 30.2) are employed and the additional impedances are switched in synchronously. In that the signal for the switching in of the additional impedance of the first sensor (30.1) is checked with the output signal of the second sensor (30.2) for the maintenance of the tolerance ranges. In that the signal for the switching in of the impedance of the second sensor (30.2) is checked with the output signal of the first sensor (30.1) for the maintenance of the tolerance ranges and in that a signal for the freedom from error of the whole arrangement is formed from the two output signals.

6. Method according to claim 5, characterized in that the two sensors (30.1, 30.2) are spatially combined and decoupling of the coils of the first sensor (30.1) from the coils of the second sensor (30.2) is effected in that the coils of the first sensor (30.1) are excited with a different frequency from the coils of the second sensor (30.2).

7. Method according to claim 5, characterized in taht decoupling of the coils of the first sensor (30.1) from the coils of the second sensor (30.2) is effected by geometric formation of the coils and/or arrangement of the coils relative to one another.

8. Apparatus for reliable determination of the spacing of a conductive reaction rail (7) from a magnetic sensor (4), which comprises a measuring coil (1) connected in a circuit, with an alternating voltage source ($U_S$ 8) for energising the circuit with an alternating voltage, so that a current dependent on the spacing of the sensor (4) form the reaction rail (7) flows through the measuring coil in a "measuring" mode of operation, and with a measuring point (16) for measuring the current flowing through the measuring coil (1) and for generating output signals corresponding to the spacing, characterized by a reference coil (2) connected in a further circuit and only weakly coupled magnetically to the reaction rail (7), an alternating voltage source ($U_S$ 8, $U_S$ 21) for supplying both circuits for a "test" mode of operation, through the switching in of which the output signals become substantially independent of spacing, a circuit arrangement (20) for periodically switching the additional impedances ($Z_{VS}$ 18, $Z_{VR}$ 19) in and out in order to establish the "measuring" and "test" modes of operation, a measuring point formed as a differential current measuring point (16) in a part of the circuit common to the measuring coil (1) and the reference coil (2) and a circuit arrangement (42-63) for monitoring the output signals for maintenance of predetermined tolerance ranges in the "measuring" and "test" modes of operation and for generating a cut-off signal on the output signals falling outside these tolerance ranges.

9. Apparatus according to claim 8. characterized in that the reference coil (2) has a smaller winding cross-section than the measuring coil (1).

10. Apparatus according to claim 9, characterized in that the measuring coil is wound in the form of two strands with alternating sense of winding and the reference coil in the form of two strands with the winding sense alternating likewise.

**Revendications**

1. Procédé pour déterminer de façon fiable la distance entre un capteur magnétique (4) et un rail de réaction conducteur (7), selon lequel un circuit électrique comportant une bobine de mesure (1) est alimenté avec une tension alternative et le courant de la bobine, fonction de la distance entre la bobine de mesure (1) et le rail de réaction (7), est utilisé pour produire des signaux de sortie appropriés, caractérisé en ce qu'une bobine de référence (2), montée dans un autre circuit électrique et ne se trouvant que faiblement couplée magnétiquement avec le rail de réaction (7),est alimentée avec la même tension alternative que la bobine de mesure (1), et on utilise, pour produire les signaux de sortie, le courant différentiel entre le courant de la bobine de mesure (1) et le courant de la bobine de référence (2), en ce que, grâce à la mise en circuit périodique respectivement d'une impédance supplémentaire ($Z_{VS}$ 18, $Z_{VR}$ 19) dans les circuits électriques, on produit alternativement des modes de fonctionnement "mesurer" et "contrôler" de telle sorte que les signaux de sortie dans les modes de fonctionnement "mesurer" correspondent à une valeur sensiblement indépendante de la distance, en ce que, pendant les modes de fonctionnement "mesurer", les signaux de sortie correspondant à la distance sont contrôlés en ce que concerne le respect de plages de tolérances prédéterminées, tandis que les signaux de sortie non fonction de la distance le sont pendant les modes de fonctionnement "contrôler", et en ce que, lorsque ces plages de tolérances sont dépassées, des signaux d'arrêt sont produits.

2. Procédé selon la revendication 1, caractérisé en ce que les impédances supplémentaires ($Z_{VS}$ 18, $Z_{VR}$ 19) sont choisies de telle sorte que le signal de sortie dans le mode de fonctionnement "contrôler" correspond à une distance minimale présélectionnée.

3. Procédé selon la revendication 1 ou 2, caractérisé en ce que les composantes actives et les composantes réactives des signaux de sortie sont séparées par un interrupteur (24, 25) commandé selon la période de la tension appliquée, qu'elles sont redressées et ensuite lissées.

4. Procédé selon la revendication 1, caractérisé en ce que les composantes actives et les composantes réactives sont pondérées de telle sorte que l'influence du rainurage du rail de réaction (7) est de même importance dans les deux composantes et en opposition de phase et en ce qu'on les additionne pour former un signal de sortie.

5. Procédé selon l'une des revendications 1 à 4, caractérisé en ce qu'on utilise deux capteurs (30.1, 30.2) et que les impédances supplémentaires sont connectées en synchronisme, en ce que le signal pour la connexion de l'impédance supplémentaire du premier capteur (30.1) est contrôlé avec le signal de sortie du deuxième capteur (30.2) en ce qui concerne le respect des plages de tolérances, en ce que le signal pour la connexion de l'impédance du deuxième capteur (30.2) est contrôlé avec le signal de sortie du premier capteur (30.1) en ce qui concerne le respect des plages de tolérances, et en ce qu'à partir des deux signaux de sortie, on forme un signal pour indiquer l'absence d'erreur dans l'ensemble de l'agencement de mesure.

6. Procédé selon la revendication 5, caractérisé en ce que les deux capteurs (30.1, 30.2) sont groupés spatialement et qu'on provoque un désaccouplement entre les bobines du premier capteur (30.1) et les bobines du deuxième capteur (30.2) par le fait qu'on fait fonctionner les bobines du premier capteur (30.1) avec une autre fréquence que les bobines du deuxième capteur (30.2).

7. Procédé selon la revendication 5, caractérisé en ce que le désaccouplement entre les bobines du premier capteur (30.1) et les bobines du deuxième capteur (30.2) est provoqué par la configuration géométrique des bobines et/ou l'agencement des bobines l'une par rapport à l'autre.

8. Dispositif pour déterminer de façon fiable la distance entre un capteur magnétique (4) et un rail de réaction conducteur (7), comportant une bobine de mesure (1) montée dans un circuit électrique, le dispositif comportant une source de tension alternative ($U_S$ 8) pour alimenter le circuit en tension alternative de telle sorte que, dans un mode de fonctionnement "mesurer", un courant fonction de la distance entre le capteur (4) et le rail de réaction (7) passe à travers la bobine de mesure (1) et un poste de mesure (16) pour mesurer le courant traversant la bobine de mesure (1) et pour produire des signaux de sortie fonction de la distance, caractérisé par une bobine de référence (2) montée dans un autre circuit électrique et ne se trouvant que faiblement couplée magnétiquement avec le rail de réaction (7), par une source de tension alternative ($U_S$ 8, $U_S'$ 21) pour alimenter les deux circuits électriques, par une impédance supplémentaire ($Z_{VS}$ 18, $Z_{VR}$ 19) disposée dans chaque circuit pour un mode de fonctionnement "contrôler", grâce à la connexion desquelles les signaux de sortie deviennent pratiquement indépendants de la distance, par un dispositif de commutation (20) pour les mises en circuit et hors circuit périodiques des impédances supplémentaire ($Z_{VS}$ 18, $Z_{VR}$ 19) aux fins d'établir les modes de fonctionnement "mesurer" et "contrôler", par un poste de mesure réalisé en tant que poste de mesure différentielle du courant (16) dans une partie des circuits électriques commune à la bobine de mesure (1) et à la bobine de référence (2), et par un agencement de circuits (42-63) pour contrôler les signaux de sortie en ce qui concerne le respect de plages de tolérances présélectionnées dans les modes de fonctionnement "mesurer" et "contrôler" et pour produire un signal d'exploration lorsque les signaux de sortie sortent de ces plages de tolérances.

9. Dispositif selon la revendication 8, caractérisé en ce que la bobine de référence (2) a une plus petite section d'enroulement que la bobine de mesure (1).

10. Dispositif selon la revendication 9, caractérisé en ce que la bobine de mesure est enroulée sous la forme de deux boucles ayant un sens d'enroulement alterné et la bobine de référence est enroulée sous la forme de deux boucles ayant également un sens d'enroulement alterné.

Fig. 1

$$i_W = \frac{U}{R_{(s)}} \quad ; \quad (14)$$

$$i_B = \frac{U}{X_{(s)}} \quad ; \quad (15)$$

Fig. 2

$$\underline{i}_{\underline{S}} - \underline{i}_{\underline{R}} = \underline{U}_{\underline{S}} \left[ \frac{1}{\underline{Z}_{\underline{S}}} - \frac{1}{\underline{Z}_{\underline{R}}} \right] \text{ 'Messen'}$$

$$\underline{i}_{\underline{S}} - \underline{i}_{\underline{R}} = \underline{U}_{\underline{S}} \left[ \frac{1}{\underline{Z}_{\underline{R}} + \underline{Z}_{V_{\underline{S}}}} - \frac{1}{\underline{Z}_{\underline{R}} + \underline{Z}_{V_{\underline{R}}}} \right] \text{ 'Prüfen'}$$

Fig. 3

Fig. 4

Fig. 5

EP 0 264 461 B1

Fig. 6

Fig. 7